# EUROPEAN PATENT APPLICATION

(11) **EP 3 913 533 A2**
(43) Date of publication of application: **24.11.2021**
(21) Application number: 21190806.6
(22) Date of filing: 11.08.2021
(51) Int. Cl.: G06K 9/32, G06K 9/62

(54) **METHOD AND APPARATUS OF PROCESSING IMAGE DEVICE AND MEDIUM**

(30) Priority: 27.11.2020 CN 202011356738
(71) Applicant: BEIJING BAIDU NETCOM SCIENCE TECHNOLOGY CO., LTD., No.10 Shangdi 10th Street Haidian District Beijing 100085 (CN)
(72) Inventor: DU, Yuning, Beijing, 100085 (CN); YANG, Yehua, Beijing, 100085 (CN); WEI, Shengyu, Beijing, 100085 (CN); GUO, Ruoyu, Beijing, 100085 (CN); LIU, Qiwen, Beijing, 100085 (CN); ZHAO, Qiao, Beijing, 100085 (CN); BI, Ran, Beijing, 100085 (CN); HU, Xiaoguang, Beijing, 100085 (CN); YU, Dianhai, Beijing, 100085 (CN); MA, Yanjun, Beijing, 100085 (CN)
(74) Representative: Stöckeler, Ferdinand

(57) **Abstract**

The present disclosure provides a method and apparatus of processing an image, a device and a medium, which relates to a field of artificial intelligence, and in particular to a field of deep learning and image processing. The method includes: determining a background image of the image, wherein the background image describes a background relative to characters in the image; determining a property of characters corresponding to a selected character section of the image; replacing the selected character section with a corresponding section in the background image, so as to obtain an adjusted image; and combining acquired target characters with the adjusted image based on the property. In this manner, it is possible to improve a shortage of images for different scenarios, thereby increasing a number of available images, and saving time and costs for labeling images.

## Description

### TECHNICAL FIELD

The embodiments of the present disclosure relates to a field of artificial intelligence, and in particular to a method and apparatus of processing an image, a device and a medium, in a field of deep learning and image processing.

### BACKGROUND

Image processing is used to analyze an image using a computer, so as to obtain a result as needed. With a development of artificial intelligence, the image has become an important way for the computer to acquire information. In order to process the image better, various methods of processing an image have been developed rapidly in a field of machine learning.

Deep learning (DL) is a new research direction in the field of machine learning. Deep learning is a kind of machine learning, which may be used to process various images. In image processing for various tasks, deep learning technology needs not only good algorithm models, but also high-quality image data.

### SUMMARY

The present disclosure provides a method and apparatus of processing an image, a device and a medium.

According to a first aspect of the present disclosure, there is provided a method of processing an image. The method includes: determining a background image of the image, wherein the background image describes a background relative to characters in the image; determining a property of characters corresponding to a selected character section of the image; replacing the selected character section with a corresponding section in the background image, so as to obtain an adjusted image; and combining acquired target characters with the adjusted image based on the property.

According to a second aspect of the present disclosure, there is provided an apparatus of processing an image. The apparatus includes: a background image determining module, a first property determining module, a first replacing module, and a combining module. The background image determining module is configured to determine a background image of the image, wherein the background image describes a background relative to characters in the image. The first property determining module is configured to determine a property of characters corresponding to a selected character section of the image. The first replacing module is configured to replace the selected character section with a corresponding section in the background image, so as to obtain an adjusted image. The combining module is configured to combine acquired target characters with the adjusted image based on the property.

According to a third aspect of the present disclosure, there is provided an electronic device. The electronic device includes: at least one processor; and a memory communicatively connected to the at least one processor. The memory stores instructions executable by the at least one processor, and the instructions, when executed by the at least one processor, may cause the at least one processor to implement the method of the first aspect of the present disclosure.

According to a fourth aspect of the present disclosure, there is provided a non-transitory computer-readable storage medium having computer instructions stored thereon. The computer instructions allow a computer to implement the method of the first aspect of the present disclosure.

According to a fifth aspect of the present disclosure, there is provided a computer program product including computer programs, and the computer programs, when executed by a processor, implement the method of the first aspect of the present disclosure.

According to the technology of the present disclosure, an acquiring of an image may be solved and an efficiency of acquiring sample images may be improved.

It should be understood that the content described in this part is not intended to identify critical features or important features of the embodiments of the present disclosure, and it is not intended to limit the scope of the present disclosure. Other features of the present disclosure will become easily understood by the following description.

### BRIEF DESCRIPTION OF THE ACCOMPANYING DRAWINGS

The accompanying drawings are used to better understand the solution and do not constitute a limitation to the present disclosure, in which:
FIG. 1 schematically shows a diagram of an environment 100 in which a plurality of embodiments of the present disclosure may be implemented;
FIG. 2 shows a flowchart of a method 200 of processing an image according to some embodiments of the present disclosure;
FIG. 3A shows an example of an image 300 of some embodiments of the present disclosure;
FIG. 3B shows an example of an image 300 containing target characters of some embodiments of the present disclosure;
FIG. 4 shows a flowchart of a method 400 of replacing a character section according to some embodiments of the present disclosure;
FIG. 5 shows a flowchart of a process 500 of processing an image according to some embodiments of the present disclosure;
FIG. 6 shows a block diagram of an apparatus 600 of processing an image according to some embodiments of the present disclosure; and
FIG. 7 shows a block diagram of a device 700 capable of implementing a plurality of embodiments of the present disclosure.

### DETAILED DESCRIPTION

The exemplary embodiments of the present disclosure are described below with reference to the drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope and spirit of the present disclosure. In addition, for clarity and conciseness, descriptions of well-known functions and structures are omitted in the following description.

In the description of the embodiments of the present disclosure, a term "include" and similar terms should be understood as an open inclusion, that is, "include but not limited to". A term "based on" should be understood as " at least partially based on". A term "an embodiment" or "the embodiment" should be understood as "at least one embodiment". Terms "first", "second", etc. may refer to different objects or the same object. Other explicit definitions and implicit definitions may further be included below.

In an image task, an effect of deep learning technology depends not only on excellent algorithm models, but also on high-quality image data. For current mainstream supervised algorithms in deep learning, a number of images and a quality of the images may have a great impact on a final deep learning technology.

A main way for obtaining data is manual data collection and manual data labeling. In this process, a large number of images should be collected according to service scenarios, and the images are transmitted to a data labeling team for a manual labeling. For a labeling of a character recognition task, such as optical character recognition (OCR), there are two steps in the labeling. First, texts in the image are labeled with detection boxes separately. Second, texts in the detection boxes are recognized and marked as strings.

However, for a document scenario having a large number of strings in the image, a lot of time and labor costs are consumed to label the detection boxes and recognize the texts. Moreover, much data are required for the character recognition. Thus, the manual labeling may be a bottleneck restricting a progress of a project. In addition, in the manual labeling, if the data amount is too large, then a division of labor cooperation is needed. In this case, there may be subjective differences between different labeling operators regarding to edges of the detection boxes, judgments for obscured texts, and splits for fields, thereby leading to inconsistent labeled results. In the manual labeling, workload is relatively heavy, such that there may be a high possibility of errors. The errors may further have an impact on a subsequent model training.

Another way for acquiring data is a pure data synthesis. In the data synthesis, a batch of background images are collected first. Next, image blocks containing characters are removed from the background images directly and replaced with image blocks containing new characters. The synthesized images are relatively simple, and edges of image combinations are not smooth. Thus, the synthesized images are recognizable. Compared with original characters and original backgrounds, the image blocks containing the new characters have a different background and a different character style. Therefore, the effect is "distorted", and is quite different from a real image style.

In order to at least solve the problems above, an improved solution is proposed according to the embodiments of the present disclosure. In the solution, a background image of an image and a property of characters corresponding to a selected character section of the image are determined by a computing device. Then, the selected character section is replaced with a corresponding section in the background image by the computing device, so as to obtain an adjusted image. Next, acquired target characters are combined with the adjusted image by the computing device based on the property determined. In this manner, it is possible to improve a shortage of images for different scenarios, thereby increasing a number of available images, and saving time and costs for labeling images.

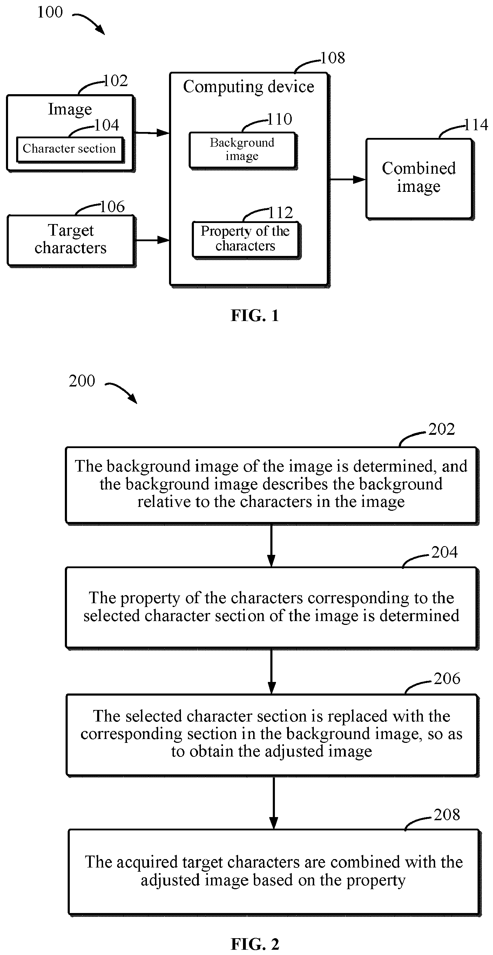

FIG. 1 schematically shows a diagram of an environment 100 in which a plurality of embodiments of the present disclosure may be implemented. The environment 100 includes a computing device 108. The computing device 108 may replace characters in an image 102 with target characters 106 to acquire a combined image 114.

The computing device 108 may be used to process the image 102. For example, the computing device 108 may acquire a background image 110 of the image 102 and a property 112 of the characters in the image 102, so as to replace the characters in the image 102. The computing device 108 may be implemented as any type of computing device, including but not limited to personal computers, server computers, handheld devices or laptop devices, mobile devices (such as mobile phones, personal digital assistants (PDAs), media players, etc.), multiprocessor systems, consumer electronics, minicomputers, mainframe computers, distributed computing environments including any of the systems or devices above, etc.

The image 102 may be used as an image sample for training a machine learning model. For example, the image 102 may be an image of a train ticket, a bus ticket, a card, a license, a metal surface, an express bill, a document, etc. An image format of the image 102 may be JPEG, TIFF, RAW or any other suitable image formats. Only one image 102 processed by the computing device 108 is shown in FIG. 1. However, this is only an example and not a specific limitation of the present disclosure. In some embodiments, the computing device 108 may process any number of images.

The image 102 includes a character section 104 or a character image. In some embodiments, characters contained in the character section 104 may be Chinese characters. In some embodiments, the characters contained in the character section 104 may be Chinese phonetic alphabets. In some embodiments, the characters contained in the character section 104 may be English words. In some embodiments, the character section 104 contains a combination of the Chinese characters and the Chinese phonetic alphabets or a combination of the Chinese characters and the English words. The examples above are only used to describe the present disclosure and are not specific restrictions on the present disclosure. The character section 104 may contain characters in any language or a combination of characters in different languages.

In some embodiments, there is a single character contained in the character section 104. In some embodiments, there are a plurality of characters contained in the character section 104. The examples above are only used to describe the present disclosure and are not specific restrictions on the present disclosure. It is shown in FIG. 1 that the image 102 includes one character section 104. This is only an example, and the image 102 may include any number of character sections.

After acquiring the image 102, the computing device 108 may determine the background image 110 of the image 102. The background image 110 describes a background relative to the characters in the image 102.

For example, it is assumed that the image 102 is a ticket image, and a background of the ticket relative to texts is blue. The background image 110 may be a blue image in which the texts are removed from the ticket. A corresponding section in the background image 110 includes a predicted blue background and the corresponding section corresponds to a text image. The examples above are only used to describe the present disclosure and are not specific restrictions on the present disclosure.

The computing device 108 may further determine the property 112 of selected characters in a selected target area of the image 102. For example, if the selected target area is an area including the character section 104, then the property 112 (such as a font, a size, a weight, a color, an underline, etc.) of the characters in the character section 104, may be determined. As an example, the target area is an area selected from the image 102 by a user. The examples above are only used to describe the present disclosure and are not specific restrictions on the present disclosure.

The computing device 108 may use the acquired background image 110 to replace the selected character section with the corresponding section in the background image 110. The computing device 108 may further acquire the target characters 106 for replacing the selected characters. In some embodiments, the target characters 106 are the Chinese characters. In some embodiments, the target characters 106 are the Chinese phonetic alphabets. In some embodiments, the target characters 106 are English letters. In some embodiments, the target characters 106 are texts in any suitable language. In some embodiments, the target characters 106 are a combination of two or more types of characters. In some embodiments, the target characters 106 includes one or more characters. The examples above are only used to describe the present disclosure and are not specific restrictions on the present disclosure.

It is shown in FIG. 1 that the computing device 108 receives one piece of target characters 106, which is only an example and not a specific limitation of the present disclosure. The computing device 108 may receive a plurality of pieces of target characters for replacing the selected characters. For example, it is assumed that the image 102 is a ticket. If the characters contained in the selected target section is a station name, then one or more other station names may be received to replace the selected station name. The examples above are only used to describe the present disclosure and are not specific restrictions on the present disclosure.

The computing device 108 sets the target characters 106 by using the determined property 112 of the characters, such that the target characters 106 have the same property as the characters in the selected character section. The set target characters 106 are then embedded into the target area of the image adjusted by the background image 110, so as to generate the combined image 114. The combined image 114 may be used as a sample image to train the machine learning model.

In this manner, it is possible to improve a shortage of images for different scenarios, thereby increasing a number of available images, and saving time and costs for labeling images.

FIG. 1 above schematically shows the diagram of the environment 100 in which the plurality of embodiments of the present disclosure may be implemented. A flowchart of a method 200 of processing an image according to some embodiments of the present disclosure is described below with reference to FIG. 2. The method 200 in FIG. 2 is implemented by the computing device 108 in FIG. 1 or any suitable computing device.

In block 202, the background image of the image is determined, and the background image describes the background relative to the characters in the image. For example, the computing device 108 determines the background image 110 of the image 102, and the background image 110 describes the background of the characters in the image 102.

In some embodiments, the computing device 108 inputs the image 102 into a background determination model to obtain the background image 110. The background determination model is a machine learning model for determining a background image of characters in an image. Alternatively or additionally, the background determination model is a neural network model, and the neural network model is trained using a sample image as an input and a background of the sample image as an output. In this way, the background image of the image may be determined quickly and accurately, thereby improving an efficiency of data processing.

In some embodiments, the computing device 108 may use any suitable image background recognition method to determine the background image of the characters in the image. In some embodiments, the background image 110 is represented by a set of pixel values corresponding to pixels in the image 102. The examples above are only used to describe the present disclosure and are not specific restrictions on the present disclosure.

In some embodiments, the computing device 108 acquires the image 102. As an example, the computing device 108 receives the image 102 from other computing devices. As another example, the computing device 108 acquires the image 102 from an external storage device or a local memory. The examples above are only used to describe the present disclosure and are not specific restrictions on the present disclosure.

The computing device 108 then determines the target area of the characters to be replaced in the image 102. For example, the user selects the target area of the image by using the computing device 108. Next, the computing device 108 determines the selected character section from the target area in the image 102. In this way, the target area to be processed may be determined quickly, thereby improving the efficiency of data processing.

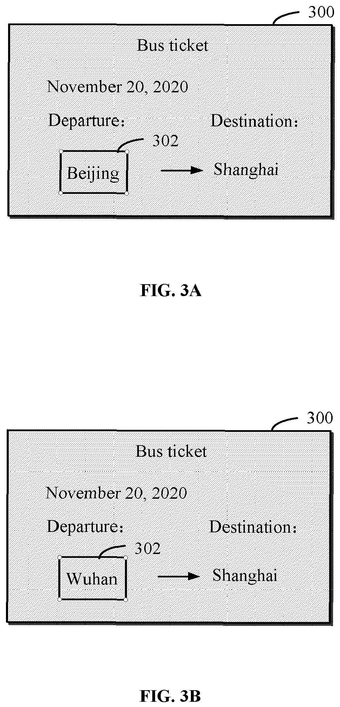

As shown in FIG. 3A, an exemplary image 300 is a bus ticket image. In order to increase a number of the bus ticket image, the user may generate more images by replacing characters in a selected character area. In FIG. 3A, the user selects an image area 302 containing characters "Beijing" as the target area, and increases the number of the images by replacing the "Beijing" in the image area 302.

Returning to FIG. 2, in block 204, the property of the characters corresponding to the selected character section of the image is determined. For example, the computing device 108 determines the property 112 of the characters corresponding to the selected character section of the image 102.

In some embodiments, the computing device 108 inputs the selected character section of the image 102 into a character property determination model to determine the property 112 of the characters. The character property determination model is a machine learning model for determining a property of characters. Alternatively or additionally, the character property determination model is a neural network model, and the neural network model is trained using a character image as an input and a property of characters as an output. In some embodiments, any suitable character recognition method may be used to determine the property of the characters in the target area. The examples above are only used to describe the present disclosure and are not specific restrictions on the present disclosure. In this way, the property of the characters may be determined quickly and accurately.

In some embodiments, the property 112 of the characters includes at least one of: the font, the size, the weight, the color, the underline, etc. Alternatively or additionally, the property may further include a glyph, an effect, a space, etc. The examples above are only used to describe the present disclosure and are not specific restrictions on the present disclosure. In the manner above, a corresponding property may be acquired quickly, thereby improving an accuracy of data acquisition.

As shown in FIG. 3A, a property of the characters "Beijing" in the target area 302 is determined. For example, a font of the characters "Beijing" is regular script, a size of the characters "Beijing" is 11, etc.

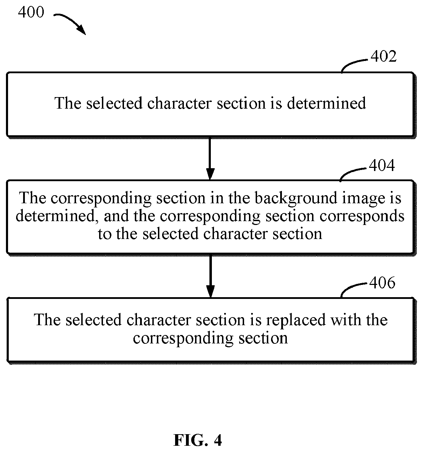

Returning to FIG. 2, in block 206, the selected character section is replaced with the corresponding section in the background image, so as to obtain the adjusted image. For example, the computing device 108 replaces the selected character section with the corresponding section in the background image 110, so as to obtain the adjusted image. This process may be described with reference to FIG. 4 below.

In block 208, the acquired target characters are combined with the adjusted image based on the property. For example, the computing device 108 combines the acquired target characters 106 with the adjusted image based on the property.

In some embodiments, the computing device 108 may acquire the target characters 106. For example, the computing device 108 may receive replacing characters uploaded by the user. Then, the computing device 108 sets the property of the target characters 106 using the determined property 112 of the characters in the image 102. In this way, the property of the target characters is same as the property of the characters to be replaced in the image, making the synthesized image more realistic.

In some embodiments, the computing device 108 combines the set target characters 106 with the target area in the image 102, so as to generate the combined image 114. As shown in FIG. 3B, it is assumed that the target characters 106 are "Wuhan". The property of "Wuhan" is set to the property determined from "Beijing" (for example, the font is "regular script", the size is 11, etc.). The characters "Wuhan", with the property set, is placed into the target area of the adjusted image, such that a new bus ticket from "Wuhan" to "Shanghai" is generated. Furthermore, the target characters 106 may be any suitable characters such as "Wuxi", "Hangzhou" and "Nanjing", which may be combined with the target area of the image to generate a synthesized image after setting the property. The examples above are only used to describe the present disclosure and are not specific restrictions on the present disclosure.

In this manner, it is possible to improve a shortage of images for different scenarios, thereby increasing a number of available images, and saving time and costs for labeling images.

The flowchart of a method 200 of processing an image according to some embodiments of the present disclosure is described above with reference to FIGS. 2 and 3. The process of replacing the character section with the corresponding section in the background image may be described in detail with reference to FIG. 4. FIG. 4 shows a flowchart of a method 400 of replacing a character section according to some embodiments of the present disclosure. The method 400 in FIG. 4 is performed by the computing device 108 in FIG. 1 or any suitable computing device.

In block 402, the selected character section is determined. For example, the computing device 108 determines the character section corresponding to the selected characters or the character image corresponding to the selected characters. For example, in FIG. 3A, the character section corresponding to the characters "Beijing" is determined.

In block 404, the corresponding section in the background image is determined, and the corresponding section corresponds to the selected character section. For example, the computing device 108 determines the corresponding section in the background image 110, and the corresponding section corresponds to the selected character section. In some embodiments, the computing device 108 determines a location of the selected character section in the image, and determines the location of the corresponding section in the background using the location of the selected character section in the image. The examples above are only used to describe the present disclosure and are not specific restrictions on the present disclosure.

In block 406, the selected character section is replaced with the corresponding section. For example, the computing device 108 replaces the character section with the corresponding section. The computing device 108 replaces the selected character section of the image 102 with the corresponding section of the background image 110, so that the target area only has a background. In some embodiments, the computing device 108 removes the character section in the target area first. Then, the corresponding section in the background image 110 is filled into the removed character section. For example, pixel values corresponding to the character section are removed, and pixel values of the corresponding section in the background image 110 is filled. The character section turns into the corresponding background. In some embodiments, the computing device 108 replaces the character section in the target area of the image with the corresponding section in the background image 110 directly. The examples above are only used to describe the present disclosure and are not specific restrictions on the present disclosure.

In this way, the characters may be removed quickly, and the background may be added to the image accurately. Thus, an efficiency of image processing may be improved and processing time may be saved.

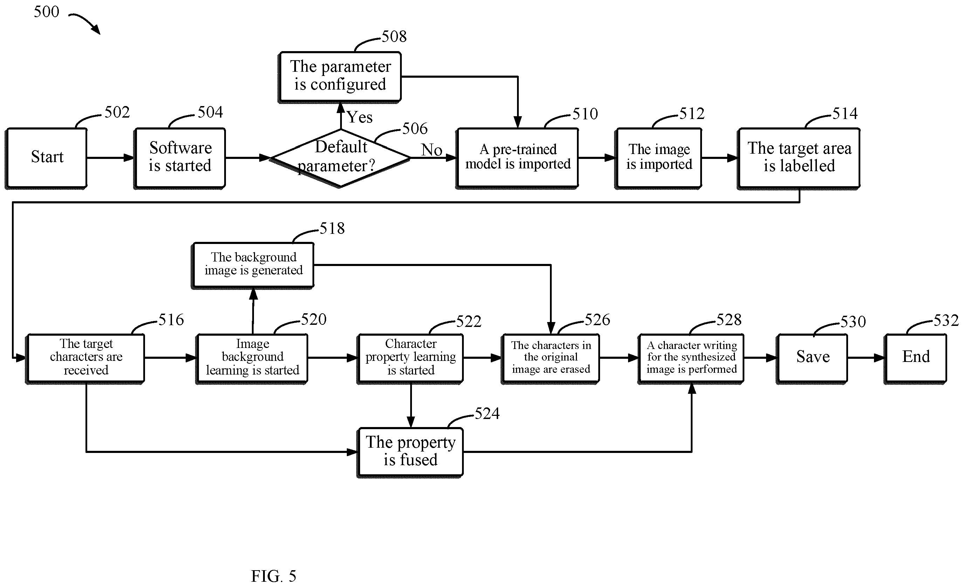

The method 400 of replacing a character section is described above with reference to FIG. 4. An example of a process 500 of processing an image is described below with reference to FIG. 5.

As shown in FIG. 5, the process 500 starts in block 502. In block 504, software for processing the image is started by the computing device 108. In block 506, it is determined by the computing device 108 whether to adjust a default parameter or not. The default parameter here is used to describe a using condition for a model to be loaded, such as a size of an image processed by the model and a correlation degree between a background of the processed image and a type of background. For example, the default parameter may be set to be more relevant to a metal-stripe background or a wood-stripe background. If the default parameter needs to be adjusted, then the parameter is configured in block 508. If it is determined not to adjust the default parameter or not to configure the parameter, then a pre-trained model is imported by the computing device 108 in block 510. The pre-trained model includes at least: the background determination model and the character property determination model.

In block 512, the image is imported into the computing device 108. In block 514, the target area to be replaced is labeled in the image. In block 516, the target characters are received by the computing device 108, that is, the replacing characters are received for replacing the characters in the target area. Image background learning is started by the computing device 108 in block 520. In block 518, the background image of the image is generated. In block 522, character property learning may further be started by the computing device 108, so as to determine the property (such as the font, the size, the weight, etc.) of the selected characters in the target area. In block 526, the characters in the original image are erased by the computing device 108. In this process, the erased character section is filled with the background image generated in block 518. However, only a background is included in the target area of the generated image. In block 524, the property of the received target characters is fused by the computing device 108 with the property of the characters determined in block 522, that is, the property of the target characters is set using the acquired property. Then, in block 528, the set target characters are combined with the target area of the image, so as to realize a character writing for the synthesized image. In block 530, the synthesized image is saved. In block 532, the process ends.

In this manner, it is possible to improve a shortage of images for different scenarios, thereby increasing a number of available images, and saving time and costs for labeling images.

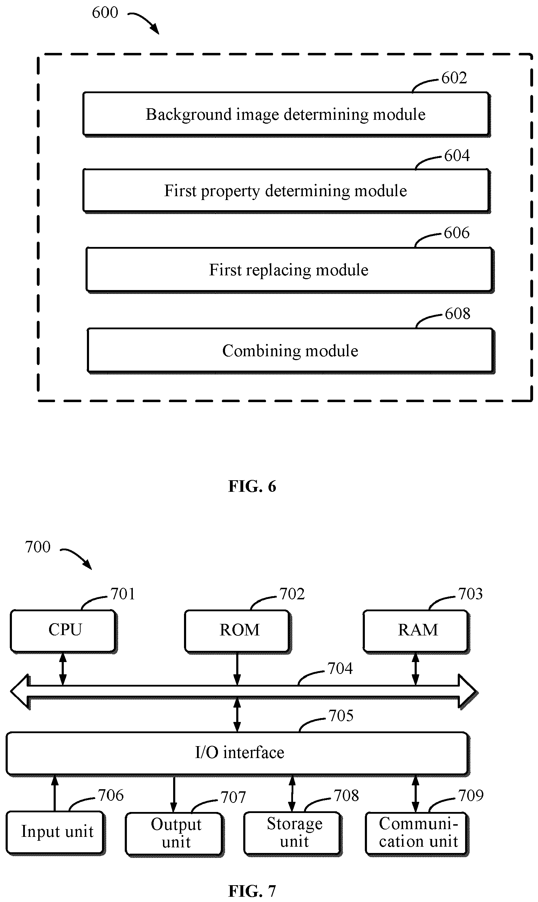

FIG. 6 shows a block diagram of an apparatus 600 of processing an image according to some embodiments of the present disclosure. As shown in FIG. 6, the apparatus 600 includes a background image determining module 602, a first property determining module 604, a first replacing module 606 and a combining module 608. The background image determining module 602 is used to determine a background image of the image. The background image describes a background relative to characters in the image. The first property determining module 604 is used to determine a property of characters corresponding to a selected character section of the image. The first replacing module 606 is used to replace the selected character section with a corresponding section in the background image, so as to obtain an adjusted image. The combining module 608 is used to combine acquired target characters with the adjusted image based on the property.

In some embodiments, the background image determining module 602 includes a background image acquiring module. The background image acquiring module is configured to input the image into a background determination model to obtain the background image. The background determination model is a machine learning model for determining a background image of characters in an image.

In some embodiments, the first property determining module 604 includes a second property determining module. The second property determining module is used to input the selected character section of the image into a character property determination model to determine the property of the characters. The character property determination model is a machine learning model for determining a property of characters.

In some embodiments, the first replacing module 606 includes a character section determining module, a corresponding section determining module and a second replacing module. The character section determining module is used to determine the selected character section. The corresponding section determining module is used to determine the corresponding section in the background image, and the corresponding section corresponds to the selected character section. The second replacing module is used to replace the selected character section with the corresponding section.

In some embodiments, the combining module 608 includes a target character acquiring module and a target character property determining module. The target character acquiring module is used to acquire the target characters. The target character property determining module is used to determine a property of the target characters based on the property of the characters corresponding to the selected character section of the image.

In some embodiments, the property includes at least one of: a font, a size, a weight, a color, or an underline.

In some embodiments, the apparatus 600 further includes an image acquiring module and a selected character section determining module. The image acquiring module is used to acquire the image. The selected character section determining module is used to determine the selected character section from a target area in the image.

According to the embodiments of the present disclosure, the present disclosure further provides an electronic device and a readable storage medium.

FIG. 7 shows a block diagram of a device 700 capable of implementing a plurality of embodiments of the present disclosure. The device 700 may be used to realize the computing device 108 in FIG. 1. As shown in FIG. 7, the device 700 includes a computing unit 701, which may execute various appropriate actions and processing according to computer program instructions stored in a read only memory (ROM) 702 or computer program instructions loaded into a random access memory (RAM) 703 from a storage unit 708. Various programs and data required for operations of the device 700 may further be stored in the RAM 703. The computing unit 701, the ROM 502 and the RAM 503 are connected to each other through a bus 704. An input/output (I/O) interface 705 is further connected to the bus 704.

A plurality of components in the device 700 are connected to the I/O interface 705, including: an input unit 706, such as a keyboard, a mouse, etc.; an output unit 707, such as various types of displays, speakers, etc.; the storage unit 708, such as a magnetic disk, an optical disk, etc.; and a communication unit 709, such as a network card, a modem, a wireless communication transceiver, etc. The communication unit 709 allows the device 700 to exchange information/data with other devices through a computer network such as the Internet and/or various telecommunication networks.

The computing unit 701 may be various general-purpose and/or special-purpose processing assemblies having processing and computing capabilities. Examples of the computing unit 701 include but are not limited to a central processing unit (CPU), a graphics processing unit (GPU), various special-purpose artificial intelligence (AI) computing chips, various computing units running machine learning model algorithms, digital signal processing (DSP), and any appropriate processor, controller, microcontroller, etc. The computing unit 701 implements the various methods and processes described above, for example, the methods 200 and 400. For example, in some embodiments, the methods 200 and 400 may be implemented as computer software programs, which are tangibly contained in a machine-readable medium, such as the storage unit 708. In some embodiments, part of the computer programs or all of the computer programs may be loaded and/or installed on the device 700 via the ROM 702 and/or the communication unit 709. When the computer programs are loaded into the RAM 703 and executed by the computing unit 701, one or more operations of the methods 200 and 400 described above may be executed. Optionally, in other embodiments, the computing unit 701 may be configured to implement the methods 200 and 400 in any other suitable manner (for example, by means of firmware).

The functions described above may be at least partially implemented by one or more hardware logic components. For example, exemplary hardware logic components include but are not limited to field programmable gate arrays (FPGA), application specific integrated circuits (ASIC), application-specific standard products (ASSP), systems on a chip (SOC), complex programmable logic devices (CPLD), etc.

Program codes for implementing the method of the present disclosure may be written in any combination of one or more programming languages. These program codes may be provided to processors or controllers of general-purpose computers, special-purpose computers, or other programmable data processing devices, so that the program codes, when executed by the processors or controllers, implement the functions/operations specified in the flowcharts and/or block diagrams. The program codes may be executed on a machine entirely, executed on a machine partly, executed on a machine partly as an independent software package and executed on a remote machine partly, or executed on a remote machine or server entirely.

In the context of the present disclosure, the machine-readable medium may be a tangible medium, which may contain or store programs used by an instruction execution system, an instruction execution apparatus, or an instruction execution device or used in combination with the instruction execution system, the instruction execution apparatus, or the instruction execution device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage media may include electrical connections based on one or more wires, portable computer disks, hard disks, random access memories (RAM), read only memories (ROM), erasable programmable read only memories (EPROM or flash memory), optical fibers, portable compact disk read only memory (CD-ROM), optical storage device, magnetic storage device, or any suitable combination of the above.

In addition, although the operations are described in a specific order, this should be understood as requiring such operations to be performed in the specific order shown or in a sequential order, or requiring all illustrated operations to be performed to achieve the desired results. In certain circumstances, multitasking and parallel processing may be advantageous. Likewise, although several specific implementation details are included in the discussion above, these should not be construed as limiting the scope of the present disclosure. Certain features described in the context of separate embodiments may also be implemented in combination in a single implementation. Conversely, various features described in the context of a single implementation may also be implemented in a plurality of implementations individually or in any suitable sub-combination.

Although the subject matter has been described in language specific to structural features and/or method logical actions, it should be understood that the subject matter defined in the appended claims is not necessarily limited to the specific features or actions described above. On the contrary, the specific features and actions described above are merely exemplary forms of implementing the claims.

## Claims

1. A method (200) of processing an image, comprising:
determining (202) a background image of the image, wherein the background image describes a background relative to characters in the image;
determining (204) a property of characters corresponding to a selected character section of the image;
replacing (206) the selected character section with a corresponding section in the background image, so as to obtain an adjusted image; and
combining (208) acquired target characters with the adjusted image based on the property.

2. The method of claim 1, wherein determining the background image comprises:
inputting the image into a background determination model to obtain the background image, wherein the background determination model is a machine learning model for determining a background image of characters in an image.

3. The method of claim 1, wherein determining the property comprises:
inputting the selected character section of the image into a character property determination model to determine the property of the characters, wherein the character property determination model is a machine learning model for determining a property of characters.

4. The method of claim 1, wherein the replacing the selected character section with a corresponding section in the background image comprises:
determining (400) the selected character section;
determining (404) the corresponding section in the background image, wherein the corresponding section corresponds to the selected character section; and
replacing (406) the selected character section with the corresponding section.

5. The method of claim 1, wherein the combining acquired target characters with the adjusted image comprises:
acquiring the target characters; and
determining a property of the target characters based on the property of the characters corresponding to the selected character section of the image.

6. The method of claim 1, wherein the property comprises at least one of: a font, a size, a weight, a color, or an underline.

7. The method of claim 1, further comprising:
acquiring the image; and
determining the selected character section from a target area in the image.

8. An apparatus (600) of processing an image, comprising:
a background image determining module (602), configured to determine a background image of the image, wherein the background image describes a background relative to characters in the image;
a first property determining module (604), configured to determine a property of characters corresponding to a selected character section of the image;
a first replacing module (606), configured to replace the selected character section with a corresponding section in the background image, so as to obtain an adjusted image; and
a combining module (608), configured to combine acquired target characters with the adjusted image based on the property.

9. An electronic device (700), comprising:
at least one processor (701); and
a memory communicatively connected to the at least one processor, wherein the memory stores instructions executable by the at least one processor, and the instructions, when executed by the at least one processor, cause the at least one processor to implement the method of any preceding claim.

10. A non-transitory computer-readable storage medium having computer instructions stored thereon, wherein the computer instructions allow a computer to implement the method of any preceding claim.

11. A computer program product including computer programs, and the computer programs, when executed by a processor, implement the method of any preceding claim.
